(19) Europäisches Patentamt
European Patent Office
Office européen des brevets

(11) **EP 4 224 697 A1**

(12) **EUROPEAN PATENT APPLICATION**

(43) Date of publication:
**09.08.2023 Bulletin 2023/32**

(21) Application number: **22155517.0**

(22) Date of filing: **08.02.2022**

(51) International Patent Classification (IPC):
***H02M 7/5387*** (2007.01)    ***H02P 23/14*** (2006.01)

(52) Cooperative Patent Classification (CPC):
**H02M 7/53876; H02P 23/14**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB SCHWEIZ AG**
**5400 Baden (CH)**

(72) Inventors:
• **DARIVIANAKIS, Georgios**
**8046 Zürich (CH)**

• **GEYER, Tobias**
**5408 Ennetbaden (CH)**
• **MUSZYNSKI, Peter**
**02630 Espoo (FI)**
• **TSOUMAS, Ioannis**
**8032 Zürich (CH)**

(74) Representative: **Qip Patentanwälte**
**Dr. Kuehn & Partner mbB**
**Goethestraße 8**
**80336 München (DE)**

(54) **METHOD, COMPUTER PROGRAM, AND CONTROLLER FOR CONTROLLING AN ELECTRICAL CONVERTER, ELECTRICAL CONVERTER, AND COMPUTER-READABLE MEDIUM**

(57)    A method for controlling an electrical converter (12) for driving an electrical machine (18) comprises the steps of: estimating a stator flux vector ($\psi_s$) depending on at least one measurement in the electrical converter (12); receiving a rotor speed ($\omega_r$) of the electrical machine (18); determining an optimized pulse pattern (OPP) for the electrical converter (12) depending on the rotor speed ($\omega_r$); determining a rotor angle ($\theta_r$) of a rotor flux vector depending on the rotor speed ($\omega_r$); determining a reference stator angle $(\theta_s^*)$ of the stator flux vector ($\psi_s$) depending on the rotor angle ($\theta_r$); determining a reference stator flux vector $(\psi_s^*)$ depending on the optimized pulse pattern (OPP) and the reference stator angle $(\theta_s^*)$; determining a difference between the reference stator flux vector $(\psi_s^*)$ and the estimated stator flux vector ($\psi_s$); modifying switching instants (42) of the optimized pulse pattern (OPP), such that the difference is minimized; and applying at least a part of the modified optimized pulse pattern (OPP) to the electrical converter (12).

**Fig. 7**

**Description**

FIELD OF THE INVENTION

The invention relates to the field of high-power electronics. In particular, the invention relates to a method, a computer program, and a controller for controlling an electrical converter, and to an electrical converter and a computer-readable medium, on which the computer program may be stored.

BACKGROUND OF THE INVENTION

Optimized pulse patterns (OPPs) relate to a specific pulse width modulation method. Offline computed and optimized pulse patterns may be used for modulating the semiconductor switches in an electrical converter. Based on the actual speed and flux reference (provided for example by an outer control loop), a controller may determine a best suited offline computed pulse pattern, which then may be applied to the semiconductor switches of the electrical converter. Offline computed optimized pulse patterns may allow the minimization of the overall current distortion for a given switching frequency.

When the electrical converter is used for driving an electrical machine, the harmonic losses in the stator winding of the electrical machine may be proportional to the current distortion, while the switching losses of the power inverter may related to the switching frequency. In a grid-connected converter setting, stringent standards may be imposed on the voltage and current distortions a converter may inject into the grid. Traditionally, it has only been possible to use optimized pulse patterns in a modulator driven by a very slow control loop. This may lead to very long transients and to harmonic excursions of the currents when changing the operating point.

EP 2 469 692 A1 describes a control method that combines the merits of direct torque control and optimized pulse patterns, by manipulating in real time the switching instants of the pre-computed optimized pulse patterns, so as to achieve fast closed-loop control. This so-called model predictive pulse pattern controller (MP$^3$C) may address in a unified approach the tasks of the inner current control loop and modulator. MP$^3$C may control a flux vector, which, in case of an electrical converter driving an electrical machine, is typically the stator flux linkage vector of the electrical machine. For grid-connected converters, the virtual converter flux may constitute the flux vector.

MP$^3$C achieves short response times during transients, and a good rejection of disturbances. At steady-state operating conditions, due to the usage of optimized pulse patterns, a nearly optimal ratio of harmonic current distortions per switching frequency may be obtained. Compared to state-of-the-art trajectory controllers, MP$^3$C may provide two advantages. First, a complicated observer structure to reconstruct the fundamental quantities may not be required. Instead, a flux space vector, which may be the controlled variable, may be estimated directly by sampling the currents and the DC-link voltage at regular sampling intervals. Second, by formulating an optimal control problem and using a receding horizon policy, the sensitivity to flux observer noise may be greatly reduced.

During transient operation, such as reference step or ramp changes, large disturbances and faults, the controlled variables, such as currents, electromagnetic torque and flux linkage, are typically required to change in a step-like fashion or they may have to follow a steep ramp. Examples may include fast torque steps in high performance drives and power steps in low-voltage ride through operation.

In MP$^3$C, closed-loop control may be achieved by modifying the switching instants of the optimized pulse patterns' switching transitions in real time. More specifically, the switching transitions are modified in time, such that the flux error may be removed at a future time instant. Note that in optimized pulse patterns, the switching transitions are not evenly distributed in time. At very low switching frequencies, long time intervals may arise between two switching transitions. When a reference step is applied at the beginning of such a time interval, a significant amount of time may elapse before the controlled variables start to change, resulting in a long initial time delay and also prolonging the settling time.

Once the controlled variable has started to change, the transient response may be sluggish and significantly slower than when using deadbeat control or direct torque control, for example. The sluggish response is typically due to the absence of a suitable voltage vector that moves the controlled flux vector with the maximum speed and in the direction that ensures the fastest possible compensation of the torque or current error. In order to ensure a very fast transient response during a transient, at least one phase may need to be connected to the upper or lower DC-link rail of the converter. In a low-voltage ride through setting, for example, this may imply reversing the voltage in at least one phase from its maximal to its minimal value, or vice versa, during a major part of the transient.

Directly related to the behaviour of sluggish transient responses is the issue of current excursions during transients. Such excursions may occur when the switching transitions, which are to be shifted in time so as to remove the flux error, are spread over a long time interval. This may increase the risk that the flux vector is not moved along the shortest path from its current to its new desired position. Instead, the flux vector may temporarily deviate from this path, exceeding its nominal magnitude. This may be equivalent to a large current, which may result in an over-current trip.

Related issues may also arise at quasi steady-state operating conditions, where small variations in the operating point and/or the inverter voltages occur. Specifically, fluctuations in the DC-link voltage, resistive voltage drops in the machine's stator windings or in the grid impedance and transitions between different pulse patterns may lead to a degradation of the closed-loop performance of MP$^3$C, if they are not properly accounted for.

Particularly in cases, where the optimized pulse patterns' switching transitions exhibit an uneven distribution in time and when a very low switching frequency is used, these flux errors may not be accounted for in a timely fashion due to the absence of suitable switching transitions. As a result, large flux errors may arise that build up and persist over significant periods of time, leading to a poor tracking of the optimized pulse pattern's optimal flux trajectory. This may impact the total harmonic distortion of the current in a detrimental way.

With respect to the above problems, EP 2 891 241 B1 describes a method for using MP$^3$C for drive systems, which has been proven a reliable method to regulate the rotor speed. In particular, EP 2 891 241 B1 describes a manipulation of the switching instants of the offline computed OPP in real time. However, to achieve so, the method and in particular MP$^3$C relies on knowledge of the machine type and its parameters, and an accurate online estimation of the rotor flux. So, in order to be able to use MP$^3$C, the machine type and its parameters had to be known and an accurate online estimation of the rotor flux had to be carried out. Thus, the machine type and its parameters had to be known when the controller for controlling the electrical machine is produced. So, it was not possible to produce and/or program a generally usable controller which may work for different machine types, wherein at least some of these different machine types were not known at the time of the production and/or, respectively programming of the controller. Moreover, some machine parameters may not be known or available at the time of commissioning of the converter drive system, and/or they may be time varying. In addition, accurately estimating the rotor flux online may require large processing resources and/or a relatively long time.

DESCRIPTION OF THE INVENTION

It is an object of the invention to overcome the above-mentioned problems. In particular, it is an object of the present invention to provide a method for controlling an electrical converter for driving an electrical machine, wherein the method may be carried out without any knowledge about the machine type of the electrical machine and its parameters, wherein the method is quick to commission, wherein the method only requires few processing resources, and/or wherein the method may be carried out quickly. Further, it is an object of the present invention to provide a corresponding computer program, a corresponding controller for controlling an electrical converter, a corresponding an electrical converter, and a corresponding computer-readable medium.

These objects are achieved by the subject-matter of the independent claims. Further exemplary embodiments are evident from the dependent claims and the following description.

An aspect relates to a method for controlling an electrical converter for driving an electrical machine. The electrical converter may be an inverter or an active rectifier. It may be an indirect or a direct converter. In particular, the converter may be a high-power converter adapted for converting current with more than 100 A and/or 1000 V. The electrical machine may be an electric motor or a generator, or it may be operated as an electric motor in a first operation mode and as a generator in a second operation mode.

According to an embodiment of the invention, the method comprises the steps of: estimating a stator flux vector depending on at least one measurement in the electrical converter; receiving a rotor speed of the electrical machine; determining an optimized pulse pattern for the electrical converter depending on the rotor speed; determining a rotor angle of a rotor flux vector depending on the rotor speed; determining a reference stator angle of the stator flux vector depending on the rotor angle; determining a reference stator flux vector depending on the optimized pulse pattern and the reference stator angle; determining a difference between the reference stator flux vector and the estimated stator flux vector; modifying switching instants of the optimized pulse pattern, such that the difference is minimized; and applying at least a part of the modified optimized pulse pattern to the electrical converter.

This enables one to drive the electrical machine without knowing the machine type of the electrical machine and its parameters. Further, no online estimation of the rotor flux has to be carried out. Thus, the machine type and its parameters do not have to be known when the controller for carrying out the method is produced. So, the above method enables one to produce and/or program a generally usable controller which may work for different machine types, wherein at least some of these different machine types are not known at the time of the production and/or, respectively programming of the controller. In addition, no large processing resources and/or relatively long processing times are required for accurately estimating the rotor flux online.

The stator flux vector may be a stator flux linkage vector. The rotor speed may be measured by an encoder. The encoder may send the measured rotor speed, in particular a signal in which the measured rotor speed is encoded, to the controller for carrying out the above method, in particular for controlling the electrical converter. Then, the rotor speed, in particular the rotor speed signal, may be received by the controller.

According to an embodiment, the reference stator angle is determined depending on an angle difference between the rotor angle and a stator angle of the stator flux vector. The stator angle and the stator flux vector do not have to be determined for determining the angle difference. In contrast, the angle difference may be determined as explained in the following.

According to an embodiment, the method comprises estimating an electromagnetic torque depending on the at least one measurement in the electrical converter, and determining a reference electromagnetic torque depending on the rotor speed. The angle difference may be determined depending on the estimated electromagnetic torque and the determined reference electromagnetic torque.

According to an embodiment, the angle difference is determined from a torque error being a difference between the determined reference torque and the estimated electromagnetic torque.

According to an embodiment, the angle difference is determined with a proportional-integral (PI) controller from the torque error.

According to an embodiment, the rotor speed is measured with an encoder or estimated, e.g. by the integral of the stator voltage and/or the stator current.

According to an embodiment, the rotor angle is determined by integrating the angular rotor speed. The rotor angle may be a relative rotor angle and not an absolute rotor angle. Alternatively, the rotor angle may be the absolute rotor angle, wherein then a starting angle and a time period during which the angular rotor speed is integrated may have to be determined in advance. As a further alternative, the rotor angle may be measured with an encoder.

According to an embodiment, the optimized pulse pattern is determined depending on a modulation index and/or a maximum allowed switching frequency. The modulation index may be determined depending on a reference stator flux magnitude. The maximum allowed switching frequency may be determined in advance, e.g. empirically, e.g. by a manufacturer of the electrical converter and/or the controller.

According to an embodiment, the reference electromagnetic torque is determined from a rotor speed error being the difference between a reference angular rotor speed and the angular rotor speed.

According to an embodiment, the at least one measurement in the electrical converter comprises measuring a stator voltage and/or a stator current of the electrical converter. The stator flux vector may be estimated depending on the stator voltage and/or a stator current. Alternatively or additionally, the electromagnetic torque may be estimated depending on the stator voltage and/or a stator current.

According to an embodiment, the optimized pulse pattern comprises a sequence of switching transitions at switching instants between different switching states of the converter. The optimized pulse pattern may be loaded from a table of optimized pulse patterns stored in the controller performing the above method. The table of optimized pulse patterns may be indexed with respect to the modulation index. Optionally, the table of optimized pulse patterns may be indexed with respect to the maximal switching frequency. For each optimized pulse pattern in the table, switching transitions at switching instants may be stored. Optionally, for each optimized pulse pattern in the table a reference stator flux may be stored.

Another aspect relates to a computer program, which when being executed on a processor, e.g. a processor of the controller, is adapted for executing the steps of the above method.

Another aspect relates to a computer-readable medium in which the computer program is stored. The computer-readable medium may be a floppy disk, a hard disk, an USB (Universal Serial Bus) storage device, a RAM (Random Access Memory), a ROM (Read Only Memory), and an EPROM (Erasable Programmable Read Only Memory). The computer-readable medium may also be a data communication network, e.g. the Internet, which allows downloading a program code.

Another aspect relates to a controller for controlling the electrical converter adapted for executing the steps of the above method. For example, the control method, i.e. the above method, may be implemented on any computational hardware including DSPs, FPGAs, microcontrollers, CPUs, GPUs, multi-core platforms, and combinations thereof. In particular, the controller may comprise a memory in which the above-mentioned computer program is stored and may comprise the processor for executing the computer program.

Another aspect relates to an electrical converter, comprising a plurality of semiconductor switches and the above controller adapted for controlling the semiconductor switches of the electrical converter. The converter may be any multi-level power converter, such as a two-level converter, a three-level converter, a neutral point clamped three-level converter, a flying-capacitor four-level converter, a five-level converter, a cascaded H-bridge five-level converter, a modular multi-level converter, etc.

The electrical converter may be used on the machine side and/or on the grid side. For example, in the machine side case, the controller may control the electrical machine's stator flux vector along a pre-defined and optimal trajectory. A sine filter with inductive and capacitive elements and/or a long cable may be present between the electrical converter and the electrical machine. The controlled variables may comprise the electromagnetic torque and/or the magnitudes of the stator vectors. In the grid side case, the electrically converter may be connected via a sine filter and/or a transformer to the grid. The electrical converter's virtual flux vector may be controlled along a given trajectory by manipulating the converter switches. The controlled variables may comprise the real and/or the reactive power and/or the converter currents and/or the virtual converter flux.

It has to be understood that features of the method as described in the above and in the following may be features of the computer program, the computer-readable medium, the controller, and/or the electrical converter as described in the above and in the following.

These and other aspects of the invention will be apparent from and elucidated with reference to the embodiments described hereinafter.

BRIEF DESCRIPTION OF THE DRAWINGS

The subject-matter of the invention will be explained in more detail in the following text, with reference to exemplary embodiments which are illustrated in the attached drawings.

Fig. 1 shows a circuit representation of an induction machine model in a rotating dq-reference frame for a d-axis.

Fig. 2 shows a circuit representation of an induction machine model in the rotating dq-reference frame of figure 1 for a q-axis.

Fig. 3 illustrates a definition of the rotating dq-reference frame of figures 1 and 2.

Fig. 4 shows a circuit representation of a permanent-magnet synchronous machine in the rotating dq-reference frame of figure 3 for a d-axis.

Fig. 5 shows a circuit representation of a permanent-magnet synchronous machine in the rotating dq-reference frame of figure 3 for a q-axis.

Fig. 6 shows an example of a switching pattern modification by MP$^3$C.

Fig. 7 schematically shows an electrical system with a converter according to an embodiment of the invention.

Fig. 8 schematically shows a torque controller module according to an embodiment of the invention.

Fig. 9 shows a flow diagram of an exemplary embodiment of a method for controlling an electrical converter for driving an electrical machine.

The reference symbols used in the drawings and their meanings are listed in the summary form in the list of reference symbols. In principle, identical parts are provided with the same reference symbols in the figures.

DETAILED DESCRIPTION OF EXEMPLARY EMBODIMENTS

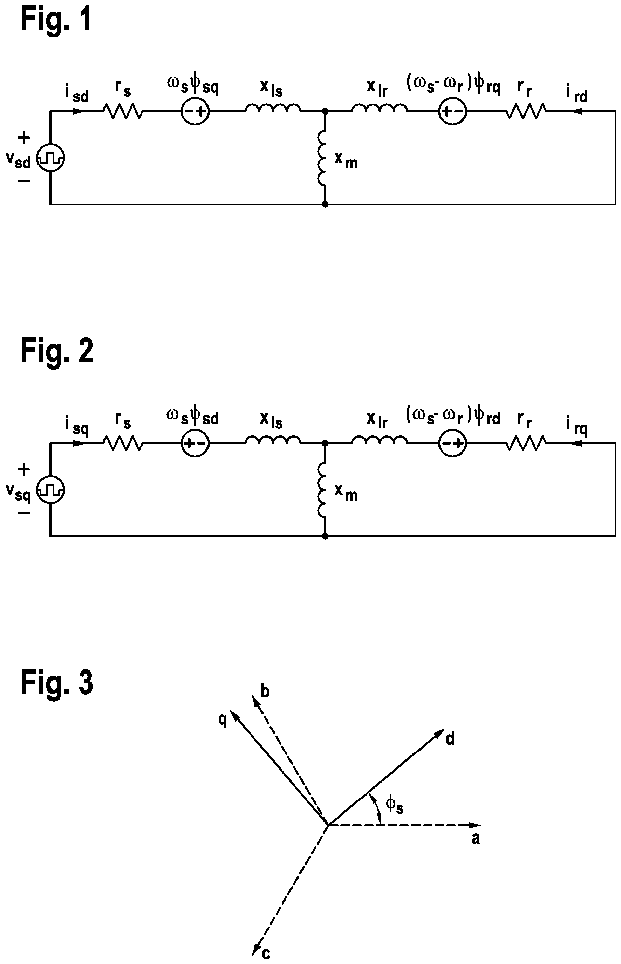

Fig. 1 shows a circuit representation of an induction machine model in a rotating dq-reference frame for a d-axis.

Fig. 2 shows a circuit representation of an induction machine model in the rotating dq-reference frame of figure 1 for a q-axis.

Fig. 3 illustrates a definition of the rotating dq-reference frame of figures 1 and 2.

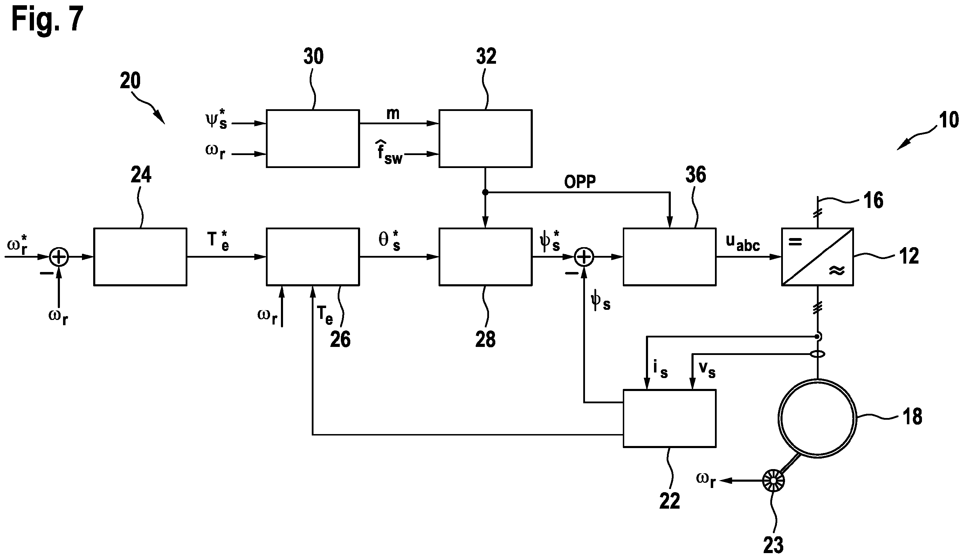

The dq-reference frame rotates with the angular stator frequency $\omega_s$, with its d-axis position denoted by $\varphi_s$. An electrical angular rotor speed is $\omega_r = p\omega_m$, where $p$ is a number of pole pairs of an electrical machine 18 (see figure 7) and $\omega_m$ is a mechanical angular speed of the rotor and shaft of the electrical machine 18. By principle of operation, $\omega_r \neq \omega_s$ due to a slip of the electrical machine 18. A stator voltage $v_s$ is given by $v_s = [v_{sd}, v_{sq}]^T$, a stator (rotor) current $i_s$ ($i_r$) is given by $i_s = [i_{sd}, i_{sq}]^T$ ($i_r = [i_{rd}, i_{rq}]^T$), and a stator (rotor) flux vector $\psi_s$ ($\psi_r$) is given by $\psi_s = [\psi_{sd}, \psi_{sq}]^T$ ($\psi_r = [\psi_{rd}, \psi_{rq}]^T$). The stator (rotor) flux vector $\psi_s$ ($\psi_r$) may be referred to as stator (rotor) flux linkage vector. A stator (rotor) winding resistance $R_s$ ($R_r$) is denoted by $R_s = diag(r_s, r_s)$ ($R_r = diag(r_r, r_r)$), a magnetizing reactance $X_m$ is denoted by $X_m = diag(x_m, x_m)$ and a stator (rotor) leakage reactance $X_{ls}$ ($X_{lr}$) is denoted by $X_{ls} = diag(x_{ls}, x_{ls})$ ($X_{lr} = diag(x_{lr}, x_{lr})$). All quantities, including time t, are normalized in a per unit (p.u.) system.

Using Kirchoff's voltage law, the stator (rotor) voltage $v_s$ ($v_r$) is given by

$$v_s = R_s i_s + \frac{d\psi_s}{dt} + \omega_s \begin{bmatrix} 0 & -1 \\ 1 & 0 \end{bmatrix} \psi_s,$$

$$v_r = R_r i_r + \frac{d\psi_r}{dt} + (\omega_s - \omega_r) \begin{bmatrix} 0 & -1 \\ 1 & 0 \end{bmatrix} \psi_r. \tag{1}$$

Here, the inverter voltage applied to the stator is given by where

$$v_s = \begin{bmatrix} v_{sd} \\ v_{sq} \end{bmatrix} = P(\phi_s) v_{abc} \tag{2}$$

$$P(\phi_s) = \frac{2}{3} \begin{bmatrix} \cos(\phi_s) & \cos(\phi_s - \frac{2\pi}{3}) & \cos(\phi_s + \frac{2\pi}{3}) \\ -\sin(\phi_s) & -\sin(\phi_s - \frac{2\pi}{3}) & -\sin(\phi_s + \frac{2\pi}{3}) \end{bmatrix} \tag{3}$$

is the matrix used to transform quantities from an abc-reference frame into the dq-reference frame. The stator and rotor flux vectors $\psi_s$, $\psi_r$ are given by

$$\psi_s = X_s i_s + X_m i_r$$

$$\psi_r = X_r i_r + X_m i_s \tag{4}$$

where $X_s = X_{ls} + X_m$ and $X_r = X_{lr} + X_m$ are the stator and, respectively, rotor linkage reactances $X_s$, $X_r$. An electromagnetic torque $T_e$ of the electrical machine 18 is given by

$$T_e = \frac{1}{pf} \psi_s \times i_s \tag{5}$$

where pf is a power factor. Using formula (4), formula (5) may be written as

$$T_e = \frac{1}{pf} \frac{x_m}{x_s x_r - x_m^2} \psi_r \times \psi_s$$

$$= \frac{1}{pf} \frac{x_m}{x_s x_r - x_m^2} \|\psi_s\| \|\psi_r\| \sin(\gamma) \tag{6}$$

where y is an angle between stator and rotor flux linkage vectors $\psi_s$, $\psi_r$.

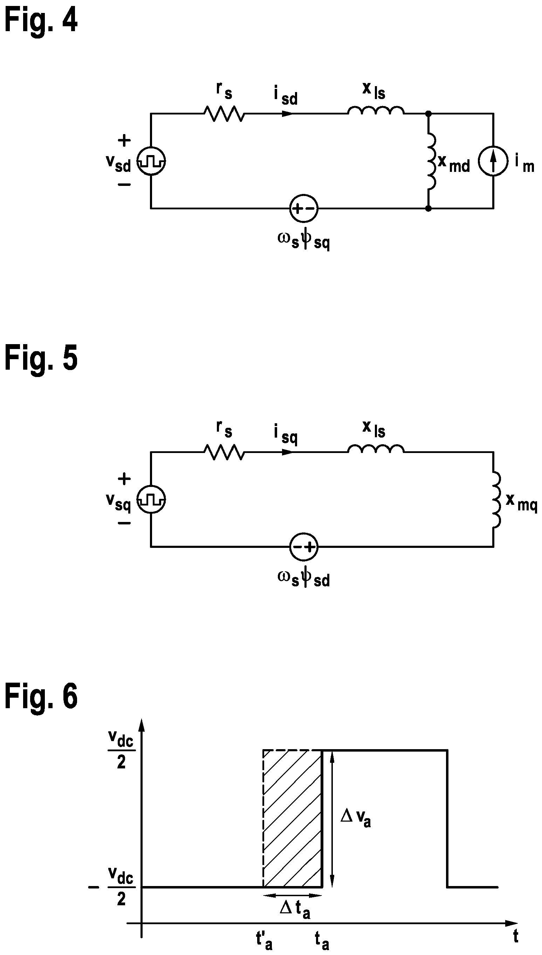

Fig. 4 shows a circuit representation of a permanent-magnet synchronous machine in the rotating dq-reference frame of figure 3 for a d-axis.

Fig. 5 shows a circuit representation of a permanent-magnet synchronous machine (PMSM) in the rotating dq-reference frame of figure 3 for a q-axis.

The dq-reference frame rotates with the angular stator speed $\omega_s$. By principle of operation, $\omega_s = \omega_r$. It may be assumed that the d-axis is aligned with the orientation of the permanent magnet mounted on the rotor of the PMSM. Hence, the rotor flux vector $\psi_r$ is given by

$$\psi_r = \begin{bmatrix} \psi_{rd} \\ \psi_{rq} \end{bmatrix} = \begin{bmatrix} x_{md} i_m \\ 0 \end{bmatrix} = \begin{bmatrix} \Psi_{PM} \\ 0 \end{bmatrix} \tag{7}$$

where $i_m$ is a hypothetical constant magnetization current flowing through the magnetizing inductance $x_{md}$. A constant magnetic flux linkage is denoted by $\Psi_{PM}$ and is generated by a permanent magnet of the electrical machine 18. The stator flux vector $\psi_s$ is given by

$$\psi_s = X_s i_s + \psi_r. \tag{8}$$

Applying Kirchoff's voltage law, the dynamics of the stator voltage $v_s$ are given by

$$v_s = R_s i_s + \frac{d\psi_s}{dt} + \omega_s \begin{bmatrix} 0 & -1 \\ 1 & 0 \end{bmatrix} \psi_s. \tag{9}$$

The electromagnetic torque $T_e$ is given by

$$\begin{aligned} T_e &= \frac{1}{\mathrm{pf}} \psi_s \times i_s \\ &= \frac{1}{\mathrm{pf}} \psi_s \times X_s^{-1} (\psi_s - \psi_r) \\ &= \frac{1}{\mathrm{pf}} \frac{1}{x_{sd}} \left( \frac{x_{sd} - x_{sq}}{x_{sq}} \psi_{sd} + \psi_{rd} \right) \psi_{sq} \end{aligned} \tag{10}$$

Note that due to the saliency of the electrical machine 18, the electromagnetic torque $T_e$ is also a function of the d-component of the stator flux. Recalling that the d-axis of the rotating dq-reference frame is aligned with the rotor flux vector $\psi_r$, the stator flux vector $\psi_s$ may be expressed by $\psi_s = [\|\psi_s\|\cos(\gamma), \|\psi_s\|\sin(\gamma)]^T$.
Then, formula (10) may be written as

$$T_e = \frac{1}{\mathrm{pf}} \frac{1}{x_{sd}} \left( \frac{1}{2} \frac{x_{sd} - x_{sq}}{x_{sq}} \|\psi_s\|^2 \sin(2\gamma) + \Psi_{PM} \|\psi_s\| \sin(\gamma) \right) \tag{11}$$

where y is the angle between stator and rotor flux vectors $\psi_s$, $\psi_r$.
Optimized pulse patterns (OPPs) relate to a specific pulse width modulation (PWM) method which enables minimization of the harmonic current distortions for a given switching frequency and are well known in the art. Compared with carrier-based PWM, the use of OPPs results in a lower switching frequency of semiconductor devices of an electrical converter for a given current total harmonic distortion (THD), in a lower current THD for a given switching frequency which implies lower machine losses of the electrical machine, and in lower machine inductances or smaller LC filters during the system design phase as an effect of the ability of OPPs to shape the current harmonic spectrum.
Hence, it can be inferred that the use of OPPs lifts the artificial and unnecessary constraint of a fixed modulation interval imposed in carrier-based PWM when optimizing the system during design and operation.
To enable the use of OPPs in electrical drive systems, the concept of model predictive pulse pattern control (MP³C) has been described in EP 2 469 692 A1. MP³C controls the position of the stator flux vector $\psi_s$ of the electrical machine 18 along an optimal flux trajectory, which is the integral of the OPP voltage waveform over time. It achieves this by manipulating in real time the switching instants of the offline computed OPP, as described in EP 2 891 241 B1.

A control objective of a drive system may be to achieve a regulation of the electrical angular rotor speed $\omega_r$ to the desired reference value $\omega_r^*$. This may be achieved by appropriately adjusting the angle between stator and rotor flux vector $\psi_s$, $\psi_r$ which may be computed by solving a nonlinear trigonometric equation (c.f., (6) and (11)) that depends on the type of the electrical machine 18, machine parameters, and/or the rotor flux vector $\psi_r$, e.g. on its orientation and/or magnitude. The electrical machine 18 may for example be an induction machine or permanent magnet machine. The machine parameters may for example be magnetizing and leakage inductances. However, acquiring knowledge of these quantities is a hard task in several applications, while robustness of the system is hindered by a false estimation of them.

Fig. 6 shows an example of a switching pattern modification by a MP³C as described in the above-mentioned prior art. An inner feedback loop of MP³C is responsible for driving the stator flux vector $\psi_s$ towards the reference stator flux vector $\psi_s^*$. This task may be achieved by a pattern controller module 36 (see figure 7), which may modify switching instants of the OPP to compensate for the difference between the stator flux vector $\psi_s$ and the reference stator flux vector $\psi_s^*$. A resulting pulse pattern may be encoded in a switching signal $u_{abc}$ (see figure 7) and may be used for driving the semiconductor switches of the electrical converter 12 (see figure 7). To illustrate this control principle, a two-level converter with stator flux vector $\psi_s$ in phase a may be given by

$$\psi_{sa}(t) = \psi_{sa}(0) + \int_0^t v_a(\tau)d\tau, \qquad (12)$$

where $v_a(t) \in \{-V_{dc}/2, V_{dc}/2\}$, with $V_{dc}$ denoting the voltage of a dc-link 16 (see figure 7). Here, it is implicitly assumed that the stator resistance is negligible. It is noted that formula (12) may be used by an observer module 22 to compute the actual stator flux vector $\psi_s$. Let $v_a(0) \in \{-V_{dc}/2, V_{dc}/2\}$ be the voltage output at $t=0$ and assume that a switching transition $\Delta v_a = \{-V_{dc}, V_{dc}\}$ may occur at time $t_a \in (0,t)$. So, the reference stator flux vector $\psi_s^*$ may be given by

$$\psi_{sa}^*(t) = \psi_{sa}(0) + \int_0^{t_a} v_a(0)d\tau + \int_{t_a}^t (v_a(0) + \Delta v_a)d\tau$$
$$= \psi_{sa}(0) + v_a(0)t_a + (v_a(0) + \Delta v_a)(t - t_a). \qquad (13)$$

If this switching instant is delayed or forwarded by a time interval $\Delta t_a$, i.e. the switching instant occurs at time $t_a + \Delta t_a$, this results in

$$\psi_{sa}(t) = \psi_{sa}(0) + \int_0^{t_a + \Delta t_a} v_a(0)d\tau + \int_{t_a + \Delta t_a}^t (v_a(0) + \Delta v_a)d\tau$$
$$= \psi_{sa}(0) + v_a(0)(t_a + \Delta t_a) + (v_a(0) + \Delta v_a)(t - t_a - \Delta t_a)$$
$$= \psi_{sa}^*(t) + \Delta v_a \Delta t_a. \qquad (14)$$

This implies that

$$\Delta \psi_{sa}(t) = \Delta v_a \Delta t_a. \qquad (15)$$

Hence, based on the difference between the measured stator flux vector $\psi_s$ and the reference stator flux vector

$\psi_s^*$ the pattern controller 36 may decide whether there is a need to delay or advance the OPP switching instants. Although this section illustrates the basic principle of operation of the pattern controller, the actual implementation may be more complicated, including functionalities such as pulse insertion which may allow for fast control of the stator flux during transients and to achieve disturbance rejection.

Fig. 7 shows an electrical system 10 comprising an electrical converter 12, a DC link, an electrical machine 18, and a controller 20. The electrical converter 12 comprises several semiconductor switches (not shown) and interconnects the DC link 16 with the electrical machine 18. The electrical converter 12 may be controlled by the controller 20. The electrical converter 12 may be an inverter. It may be a voltage source or a current source converter 12. In particular, the converter 12 may be a high-power converter adapted for converting current with more than 100 A and/or 1000 V. The electrical machine 18 may be an electric motor or a generator, or may be operated as an electric motor in a first operation mode and as a generator in a second operation mode.

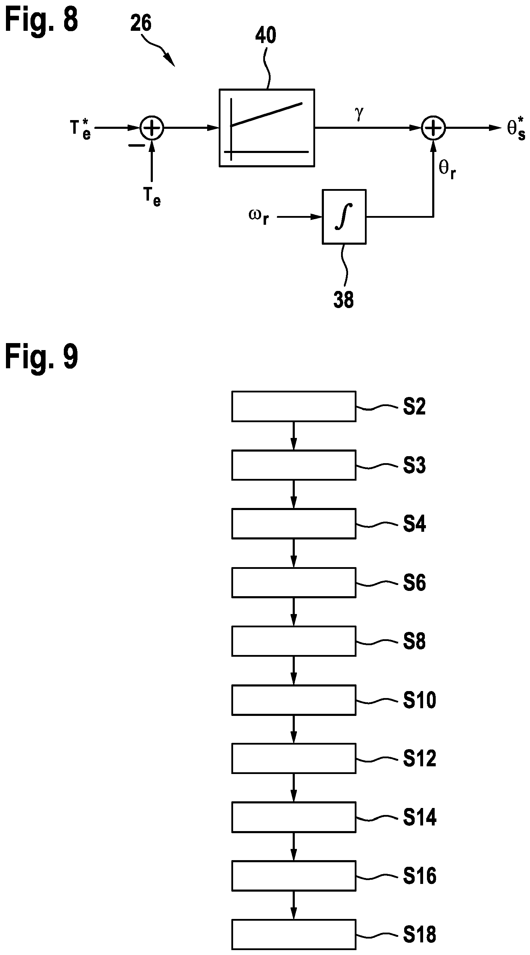

As explained in the following, the controller 20 embodies a Model-Free Vector Pulse Pattern Control (MF-VPPC) scheme based on OPPs that operates without the use of any information regarding the machine type, machine parameters or rotor flux vector of the electrical machine 18. The MF-VPPC scheme provides a regulation of the electrical angular rotor speed $\omega_r$ to its reference value $\omega_r^*$. Unlike its MP3C counterpart, MF-VPPC achieves this task without relying on any information regarding the machine type and its parameters. The control diagram of the proposed MF-VPPC scheme is described below and depicted in Figure 8.

The controller 20 comprises an observer module 22 that may receive an output current $i_s$ and/or an output voltage $v_s$ of the electrical converter 12. The output current $i_s$ and/or an output voltage $v_s$ may be inputs to the electrical motor 18 and/or may be measured at corresponding outputs of the electrical converter 12. The observer module 22 may also receive a DC-link voltage of the DC-link 16 and/or a switching signal $u_{abc}$, in which three-phase switch positions are encoded, to reconstruct the output voltage $v_s$ applied to input terminals of the electrical machine 18, instead of receiving the measured output voltage $v_s$.

A rotor speed $\omega_r$ of the electrical machine 18 may be measured by an encoder 23. Alternatively, the rotor speed may be estimated, e.g. by the integral of the stator voltage and/or the stator current.

The rotor speed $\omega_r$ may also be used by the observer module 22. Based on these quantities, the observer module 22 may estimate a stator flux vector $\psi_s$ and an electromagnetic torque $T_e$ of the electrical machine 18.

A speed controller module 24 of the controller 20 may receive a difference between a reference speed $\omega_r^*$ and the rotor speed $\omega_r$, and it may determine a reference electromagnetic torque $T_e^*$ therefrom, which may be an input to a torque controller module 26 of the controller. A task of the speed controller module 24 may be to regulate the rotor speed $\omega_r$ to its reference speed $\omega_r^*$ by modifying the reference electromagnetic torque $T_e^*$. The speed controller module 24 may comprise or may be a proportional-integral (PI) controller.

The torque controller module 26 may determine a reference stator angle $\theta_s^*$ depending on the reference electromagnetic torque $T_e^*$ and the electromagnetic torque $T_e$ as explained with respect to figure 8.

A flux reference module 28 may determine a reference stator flux vector $\psi_s^*$, which lies on an optimal flux trajectory, and may have a desired angle and a desired magnitude. In particular, the optimal flux trajectory may be obtained by integrating a pre-calculated optimized pulse pattern OPP that is selected by a pattern loader module 32 of the controller 20 based on a modulation index $m$ provided by a modulation index module 30 of the controller 20 and a maximum allowed switching frequency $\hat{f}_{sw}$ of the electrical converter 12. The maximum allowed switching frequency $\hat{f}_{sw}$ of the electrical converter 12 may be determined in advance and may be stored on a memory (not shown) of the controller 20.

The modulation index module 30 may provide at its output the desired modulation index m. The modulation index module 30 may determine the modulation index m depending on the rotor speed $\omega_r$. In case of the electrical machine 18 being an induction machine for which $\omega_r \neq \omega_s$, there will be a difference, which may be referred to as steady state error, between the estimated stator flux vector $\psi_s$ and the reference stator flux vector $\psi_s^*$. To compensate for this steady state error, the modulation index module 30 may be augmented with an integral term as well.

The pattern controller module 36 may be a conventional pattern controller module 36, e.g. as described in the above-mentioned prior art. The pattern controller module 36 may provide one, two or more functionalities as described above with respect to figure 6. The pattern controller module 36 may generate the vector of switch positions encoded in the switching signal $u_{abc}$ that may be applied to the converter 12.

Fig. 8 schematically shows the above torque controller module 26 according to an embodiment of the invention. The torque controller module 26 enables the model-free pulse pattern control scheme based on OPPs to operate without the use of any information regarding the machine type, machine parameters or rotor flux vector of the electrical machine 18. The torque controller module 26 comprises an integration module 38 and a controller 40, which may be a proportional-integral (PI) controller.

The estimated electromagnetic torque $T_e$ may be compared to its reference value $T_e^*$, and the error may be passed to a proportional-integral controller which may generate an angle difference y. In particular, the torque controller module 26 may calculate a difference between the determined reference electromagnetic torque $T_e^*$ and the estimated electromagnetic torque $T_e$. The difference may be referred to as torque error. The PI controller 40 may determine the angle difference y depending on the torque error. The angle difference y may correspond to an angle between the reference stator flux vector $\psi_s^*$ and a rotor flux vector.

A rotor angle $\theta_r$ of the rotor flux vector may be determined by integrating the rotor speed $\omega_r$, e.g. by the integrator 38. A reference stator angle $\theta_s^*$ of the reference stator flux vector $\psi_s^*$ may be obtained by adding the angle difference y to the rotor angle $\theta_r$ of the rotor flux vector.

Fig. 9 shows a flow diagram of an exemplary embodiment of a method for controlling the electrical converter 12 for driving the electrical machine 18. The method may be carried out by the controller 20.

In the following, normalized quantities are used and it is focused on a three-phase inverter 12 connected to an electrical machine 18. However, it has to be understood that the following embodiments also may be applied to an inverter connected to a general p-phase load or to a grid-connected converter connected to a power grid, in which the converter may be grid forming by setting the amplitude and frequency of the grid voltage. Additional passive elements, such as filters, transformers and/or cables may be added.

In a step S2, the stator flux vector $\psi_s$ may be estimated depending on at least one measurement in the electrical converter 12, e.g. by the observer 22. The at least one measurement in the electrical converter 12 may comprise measuring the stator voltage $v_s$ and/or the stator current $i_s$ of the electrical converter 12. Then, the stator flux vector $\psi_s$ may be estimated depending on the stator voltage $v_s$ and/or the stator current $i_s$, e.g. by the above formulas (1) or (9).

In a step S3, the rotor speed $\omega_r$ of the electrical machine 18 may be received. For example, the rotor speed $\omega_r$ may be measured by the encoder 23 and transferred to the controller 20.

In a step S4, the optimized pulse pattern OPP for the electrical converter 12 may be determined depending on the rotor speed $\omega_r$, e.g. as described in EP 2 469 692 A1. For example, the optimized pulse pattern OPP may be determined depending on the modulation index m and/or the maximum allowed switching frequency $\hat{f}_{sw}$, e.g. by the pattern loader module 32, wherein the modulation index m may be determined depending on a reference stator flux magnitude $\Psi_s^*$. The optimized pulse pattern OPP may comprise a sequence of switching transitions 42 at switching instants between different switching states of the converter 12. The determined optimized pulse pattern OPP may be loaded from a table of optimized pulse patterns. The table of optimized pulse patterns may be stored in a memory of the controller 20. The table of optimized pulse patterns may be indexed with respect to the modulation index m, and optionally with respect to the maximum allowed switching frequency $\hat{f}_{sw}$. For each optimized pulse pattern OPP in the table, switching transitions at switching instants may be stored.

In a step S6, the rotor angle $\theta_r$ of the rotor flux vector may be determined depending on the rotor speed $\omega_r$, e.g. by the integrator 38.

In a step S8 the reference stator angle $\theta_s^*$ of the stator flux vector $\psi_s$ may be determined depending on the rotor angle $\theta_r$, e.g. by the torque controller module 26. For example, the reference stator angle $\theta_s^*$ may be determined depending on the angle difference y between the rotor angle $\theta_r$ and a stator angle $\theta_s$ of the stator flux vector $\psi_s$. The angle difference *y* may be determined depending on the estimated electromagnetic torque $T_e$ and the determined reference electromagnetic torque $T_e^*$, e.g. by the PI controller 40. The angle difference *y* may be determined from the difference between the determined reference electromagnetic torque $T_e^*$ and the estimated electromagnetic torque $T_e$. The difference between the determined reference electromagnetic torque $T_e^*$ and the estimated electromagnetic torque $T_e$ may be referred to as torque error. The angle difference y may be determined with the PI controller 40 from the torque error. The electromagnetic torque $T_e$ may be estimated depending on the at least one measurement in the electrical converter 12, e.g. depending on the stator current $i_s$ and/or the stator voltage $v_s$, e.g. by the observer 22, e.g. by the formulas (5) or (10). The reference electromagnetic torque $T_e^*$ may be determined depending on the rotor speed $\omega_r$, e.g. by the speed controller module 24. For example, the reference electromagnetic torque $T_e^*$ may be determined from a difference between the reference angular rotor speed $\omega_r^*$ and the angular rotor speed $\omega_r$. The difference between the reference angular rotor speed $\omega_r^*$ and the angular rotor speed $\omega_r$ may be referred to as rotor speed error.

In a step S10, the reference flux vector $\psi_s^*$ may be determined depending on the optimized pulse pattern OPP and the reference stator angle $\theta_s^*$ , e.g. by the flux reference module 28.

In a step S12, the difference between the reference stator flux vector $\psi_s^*$ and the estimated stator flux vector $\psi_s$, i.e. the stator flux error, may be determined, e.g. by the controller 20.

In a step S14, the switching instants of the optimized pulse pattern OPP may be modified, e.g. by the pattern controller module 36, e.g. such that the stator flux error is minimized, e.g. as explained above and/or described in EP 2 891 241 B1.

In a step S16, at least a part of the modified optimized pulse pattern OPP, e.g. by the switching signal $u_{abc}$, may be applied to the electrical converter 12, e.g. by the pattern controller module 36.

The functional modules may be implemented as programmed software modules or procedures, respectively; however, someone skilled in the art will understand that the functional modules may be implemented fully or partially in hardware.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

LIST OF REFERENCE SYMBOLS

10      electrical system
12      electrical converter
16      DC link
18      electrical machine (motor or generator)
20      controller
22      observer module
23      encoder
24      speed controller module
26      torque controller module
28      flux reference module
30      modulation index module
32      pattern loader module
36      pattern controller module
38      integration module
40      PI controller
$i_s$      stator current vector
$v_s$      stator voltage vector
$\omega_r$      rotor speed
$\omega_r^*$        reference speed
$\psi_s$      estimated stator flux vector

$\psi_s^*$      reference stator flux vector

$\Psi_s^*$      reference stator flux magnitude

$T_e$      estimated electromagnetic torque

$T_e^*$      reference electromagnetic torque

Uabc      switching signal

m      modulation index

$\hat{f}_{sw}$      maximum allowed switching frequency

OPP      optimized pulse pattern

$\theta_s^*$      reference stator angle

$\theta_r$      rotor angle

S2-S 18      steps two to eighteen

**Claims**

1. A method for controlling an electrical converter (12) for driving an electrical machine (18), the method comprising:

   estimating a stator flux vector ($\psi_s$) depending on at least one measurement in the electrical converter (12);
   receiving a rotor speed ($\omega_r$) of the electrical machine (18);
   determining an optimized pulse pattern (OPP) for the electrical converter (12) depending on the rotor speed ($\omega_r$);
   determining a rotor angle ($\theta_r$) of a rotor flux vector depending on the rotor speed ($\omega_r$);
   determining a reference stator angle $(\theta_s^*)$ of the stator flux vector ($\psi_s$) depending on the rotor angle ($\theta_r$);
   determining a reference stator flux vector $(\psi_s^*)$ depending on the optimized pulse pattern (OPP) and the reference stator angle $(\theta_s^*)$;
   determining a difference between the reference stator flux vector $(\psi_s^*)$ and the the estimated stator flux vector ($\psi_s$);
   modifying switching instants of the optimized pulse pattern (OPP), such that the difference is minimized; and
   applying at least a part of the modified optimized pulse pattern (OPP) to the electrical converter (12).

2. The method of claim 1, wherein

   the reference stator angle $(\theta_s^*)$ is determined depending on an angle difference (y) between the rotor angle ($\theta_r$) and a stator angle ($\theta_s$) of the stator flux vector ($\psi_s$).

3. The method of claim 2, comprising:

   estimating an electromagnetic torque ($T_e$) depending on the at least one measurement in the electrical converter (12); and
   ($\omega_r$); determining a reference electromagnetic torque $(T_e^*)$ depending on the rotor speed

   wherein the angle difference (y) is determined depending on the estimated electromagnetic torque ($T_e$) and the determined reference electromagnetic torque $(T_e^*)$.

4. The method of claim 3,
   wherein the angle difference (y) is estimated from a torque error being a difference between the determined reference electromagnetic torque $(T_e^*)$ and the estimated electromagnetic torque ($T_e$).

5. The method of claim 4,
   wherein the angle difference (y) is determined with a proportional-integral (PI) controller (40) from the torque error.

6. The method of one of the preceding claims, wherein
wherein the rotor speed ($\omega_r$) is measured with an encoder (23) or estimated depending on the integral of the stator voltage and/or the stator current.

7. The method of one of the previous claims, wherein
the rotor angle ($\theta_r$) is determined by integrating the angular rotor speed ($\omega_r$).

8. The method of one of the previous claims, wherein
the optimized pulse pattern (OPP) is determined depending on a modulation index (m) and/or a maximum allowed switching frequency ($\hat{f}_{sw}$),

wherein the modulation index (m) is determined depending on a reference stator flux magnitude $\left(\Psi_s^*\right)$.

9. The method of one of the previous claims, wherein

the reference electromagnetic torque $\left(T_e^*\right)$ is determined from a rotor speed error being the difference between a reference angular rotor speed $\left(\omega_r^*\right)$ and the angular rotor speed ($\omega_r$).

10. The method of one of the preceding claims, wherein

the at least one measurement in the electrical converter (12) comprises measuring a stator voltage ($v_s$) and/or a stator current ($i_s$) of the electrical converter (12); and
the stator flux vector ($\psi_s$) is estimated depending on the stator voltage ($v_s$) and/or a stator current ($i_s$); and/or
the electromagnetic torque ($T_e$) is estimated depending on the stator voltage ($v_s$) and/or a stator current ($i_s$).

11. The method of claims 8 to 10, wherein

the optimized pulse pattern (OPP) comprises a sequence of switching transitions at switching instants between different switching states of the converter (12);
the optimized pulse pattern (OPP) is loaded from a table of optimized pulse patterns stored in a controller (20) performing the method;
the table of optimized pulse patterns is indexed with respect to the modulation index (m);
wherein for each optimized pulse pattern (OPP) in the table, switching transitions at switching instants are stored.

12. A computer program, which when being executed on a processor is adapted for executing the steps of the method of one of claims 1 to 11.

13. A computer-readable medium in which a computer program according to claim 10 is stored.

14. A controller (20) for controlling an electrical converter (12) adapted for executing the steps of the method of one of claims 1 to 11.

15. An electrical converter (12), comprising:

a plurality of semiconductor switches;
a controller (20) according to claim 14 adapted for controlling the semiconductor switches of the electrical converter (12).

# Fig. 1

# Fig. 2

# Fig. 3

# Fig. 4

# Fig. 5

# Fig. 6

Fig. 7

**Fig. 8**

**Fig. 9**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/350847 A1 (GEYER TOBIAS [CH] ET AL) 5 November 2020 (2020-11-05) * paragraph [0070] - paragraph [0114]; figures 1-3 * | 1-15 | INV. H02M7/5387 H02P23/14 |
| X | TOBIAS GEYER ET AL: "Model Predictive Pulse Pattern Control", IEEE TRANSACTIONS ON INDUSTRY APPLICATIONS, IEEE SERVICE CENTER, PISCATAWAY, NJ, US, vol. 48, no. 2, 1 March 2012 (2012-03-01), pages 663-676, XP011434186, ISSN: 0093-9994, DOI: 10.1109/TIA.2011.2181289 * and corresponding text; figure 7 * | 1-15 | |
| X | NIKOLAOS OIKONOMOU ET AL: "Model Predictive Pulse Pattern Control for the Five-Level Active Neutral-Point-Clamped Inverter", IEEE TRANSACTIONS ON INDUSTRY APPLICATIONS., vol. 49, no. 6, 1 November 2013 (2013-11-01), pages 2583-2592, XP055471617, US ISSN: 0093-9994, DOI: 10.1109/TIA.2013.2263273 * and corresponding text; figure 5 * | 1-15 | TECHNICAL FIELDS SEARCHED (IPC) H02M H02P |
| A,D | EP 2 469 692 A1 (ABB RESEARCH LTD [CH]) 27 June 2012 (2012-06-27) * the whole document * | 1-15 | |
| A,D | EP 2 891 241 B1 (ABB SCHWEIZ AG [CH]) 21 September 2016 (2016-09-21) * the whole document * | 1-15 | |

The present search report has been drawn up for all claims

| Place of search | Date of completion of the search | Examiner |
|---|---|---|
| Munich | 12 July 2022 | Kruip, Stephan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 224 697 A1

## ANNEX TO THE EUROPEAN SEARCH REPORT
## ON EUROPEAN PATENT APPLICATION NO.

EP 22 15 5517

12-07-2022

| Patent document cited in search report | | Publication date | Patent family member(s) | | Publication date |
|---|---|---|---|---|---|
| US 2020350847 | A1 | 05-11-2020 | CN | 111587529 A | 25-08-2020 |
| | | | EP | 3729637 A1 | 28-10-2020 |
| | | | US | 2020350847 A1 | 05-11-2020 |
| | | | WO | 2019137916 A1 | 18-07-2019 |
| EP 2469692 | A1 | 27-06-2012 | BR | PI1107034 B1 | 20-10-2020 |
| | | | CN | 102545588 A | 04-07-2012 |
| | | | EP | 2469692 A1 | 27-06-2012 |
| | | | JP | 6138414 B2 | 31-05-2017 |
| | | | JP | 2012139092 A | 19-07-2012 |
| | | | KR | 20120073151 A | 04-07-2012 |
| | | | RU | 2011152831 A | 27-06-2013 |
| | | | US | 2012161685 A1 | 28-06-2012 |
| EP 2891241 | B1 | 21-09-2016 | CN | 105745831 A | 06-07-2016 |
| | | | EP | 2891241 A1 | 08-07-2015 |
| | | | US | 2016276919 A1 | 22-09-2016 |
| | | | WO | 2015078656 A1 | 04-06-2015 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2469692 A1

- EP 2891241 B1